# EUROPEAN PATENT APPLICATION

(11) **EP 4 654 635 A1**
(43) Date of publication of application: **26.11.2025**
(21) Application number: 23916667.1
(22) Date of filing: 16.01.2023
(51) Int. Cl.: H04W 8/18, H04L 41/0894

(54) **EVENT SUBSCRIPTION METHOD AND APPARATUS, AND DEVICE**

(71) Applicant: Beijing Xiaomi Mobile Software Co., Ltd., Beijing 100085 (CN)
(72) Inventor: WU, Jinhua, Beijing 100085 (CN); SHEN, Yang, Beijing 100085 (CN)
(74) Representative: Gunzelmann, Rainer
(86) International application number: PCT/CN2023/072465
(87) International publication number: WO 2024/152176

(57) **Abstract**

The present application relates to the field of mobile communications, and discloses an event subscription method and apparatus, and a device. The method comprises: sending event subscribe information, wherein the event subscribe information is used for subscribing to a change event of a member in a service data flow group, and the change event is used for indicating that the member is added into the service data flow group or moved out of the service data flow group. The limitation that data flows belonging to a same service data flow group cannot be identified is overcome, a core network function network element can identify the data flows in the same service data flow group, and normal transmission of services is ensured.

## Description

### TECHNICAL FIELD

The disclosure relates to the field of communication technology, in particular to a method for subscribing to an event, an apparatus and a device.

### BACKGROUND

With the rapid development of mobile communications, an extended reality and media (XRM) service is proposed. A core network function network element needs to comprehensively consider data flow characteristics of the XRM service to ensure a transmission of data flow of the XRM service.

In detail, when the core network function network element manages the XRM service, the XRM service requires a fifth generation (5G) system (5GS) to comprehensively consider quality of service (QoS) characteristics of relevant data flows of the service, involving multiple XRM data flows of one terminal and XRM data flows of multiple terminals, as well as the consistency guarantee of mutual QoS authorization and execution. In order to support requirements of the XRM service and a multimodal service between terminals, an application function (AF) usually carries a group identifier (ID) when initiating a session, to indicate, via the group ID, data flows belonging to the same service data flow (SDF) group, and then, the core network function network element adjusts the data flows belonging to the same SDF group for a smooth transmission of XRM service.

However, the AF carries the group ID only when initiating the session, which makes it difficult for the core network function network element to determine whether there are data flows belonging to the SDF group corresponding to the same group ID, which imposes a limitation on the transmission of the XRM service.

### SUMMARY

The embodiments of the disclosure provide a method for subscribing to an event, an apparatus for subscribing to an event and a device, which break a limitation of being unable to identify data flows belonging to the same SDF group, enable a core network function network element to identify data flows of the same SDF group, and ensure a normal transmission of a service. The technical solutions are provided below.

According to a first aspect of the disclosure, a method for subscribing to an event is provided. The method is performed by a first network element, and includes:
sending event subscription information, in which the event subscription information is used to subscribe to a member change event within an SDF group, and the change event indicates that a member is added to or removed from the SDF group.

According to a second aspect of the disclosure, a method for subscribing to an event is provided. The method is performed by a second network element or a third network element, and includes:
receiving event subscription information, in which the event subscription information is used to subscribe to a member change event within an SDF group, and the change event indicates that a member is added to or removed from the SDF group.

According to a third aspect of the disclosure, an apparatus for subscribing to an event is provided. The apparatus includes:
a sending module, configured to send event subscription information, in which the event subscription information is used to subscribe to a member change event within an SDF group, and the change event indicates that a member is added to or removed from the SDF group.

According to a fourth aspect of the disclosure, an apparatus for subscribing to an event is provided. The apparatus includes:
a receiving module, configured to receive event subscription information, in which the event subscription information is used to subscribe to a member change event within an SDF group, and the change event indicates that a member is added to or removed from the SDF group.

According to a fifth aspect of the disclosure, a network element is provided. The network element includes: a processor, a transceiver connected to the processor and a memory configured to store instructions executable by the processor. The processor is configured to load and execute the executable instructions to realize the method for subscribing to the event described in the above aspects.

According to a sixth aspect of the disclosure, a computer readable storage medium is provided. The computer readable storage medium stores an executable program code, and the executable program code is loaded and executed by a processor to realize the method for subscribing to the event described in the above aspects.

According to a seventh aspect of the disclosure, a chip is provided. The chip includes: a programmable logic circuit and/or a program instruction. The method for subscribing to the event described in the above aspects is realized when the chip is running on a network element.

According to an eighth aspect of the disclosure, a computer program product is provided. When the computer program product executed by a processor of a network element, the method for subscribing to the event described in the above aspects are realized.

In the solutions provided by the embodiments of the disclosure, the first network element subscribes to an event of whether there is a change of the member in the SDF group by sending the event subscription information, ensuring timely synchronization of the change of the member in the SDF group, which breaks the limitation of being unable to identify data flows belonging to the same SDF group, enables a core network function network element to identify the data flows within the same SDF group, and ensures a normal transmission of a service.

### BRIEF DESCRIPTION OF THE DRAWINGS

In order to clearly illustrate the technical solutions of the embodiments of the disclosure, the drawings need to be used in the description of the embodiments will be briefly introduced below. Obviously, the drawings in the following descriptions are only some embodiments of the disclosure. For those skilled in the art, other drawings may be obtained according to these drawings without inventive work.
FIG. 1 illustrates a block diagram of a communication system provided by an example embodiment of the disclosure.
FIG. 2 illustrates a flowchart of a method for subscribing to an event provided by an example embodiment of the disclosure.
FIG. 3 illustrates a flowchart of a method for subscribing to an event provided by an example embodiment of the disclosure.
FIG. 4 illustrates a flowchart of a method for subscribing to an event provided by an example embodiment of the disclosure.
FIG. 5 illustrates a flowchart of a method for reporting an event provided by an example embodiment of the disclosure.
FIG. 6 illustrates a flowchart of a method for subscribing to an event provided by an example embodiment of the disclosure.
FIG. 7 illustrates a block diagram of an apparatus for subscribing to an event provided by an example embodiment of the disclosure.
FIG. 8 illustrates a block diagram of an apparatus for subscribing to an event provided by another example embodiment of the disclosure.
FIG. 9 illustrates a block diagram of an apparatus for subscribing to an event provided by an example embodiment of the disclosure.
FIG. 10 illustrates a block diagram of an apparatus for subscribing to an event provided by another example embodiment of the disclosure.
FIG. 11 illustrates a schematic diagram of a communication device provided by an example embodiment of the disclosure.

### DETAILED DESCRIPTION

In order to make the purpose, technical solutions and advantages of this application more clear, the implementations of the disclosure will be further described in detail in combination with the attached drawings.

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the disclosure. Instead, they are merely examples of apparatuses and methods consistent with aspects related to the disclosure as recited in the attached claims.

The terms used in the disclosure are only for the purpose of describing specific embodiments, and are not intended to limit the disclosure. The singular forms of "a", "the" and "said" used in the disclosure and attached claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in the disclosure to describe various types of information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein may be interpreted as "when", "upon" or "in response to determining".

It should be noted that information (including but not limited to user equipment (UE) information, user personal information, etc.), data (including but not limited to data used for analysis, stored data, displayed data, etc.) and signals involved in this application are all authorized by the user or fully authorized by all parties, and collection, use and processing of relevant data all comply with relevant laws, regulations and standards of relevant countries and regions.

Firstly, the application scenario of this application is described.

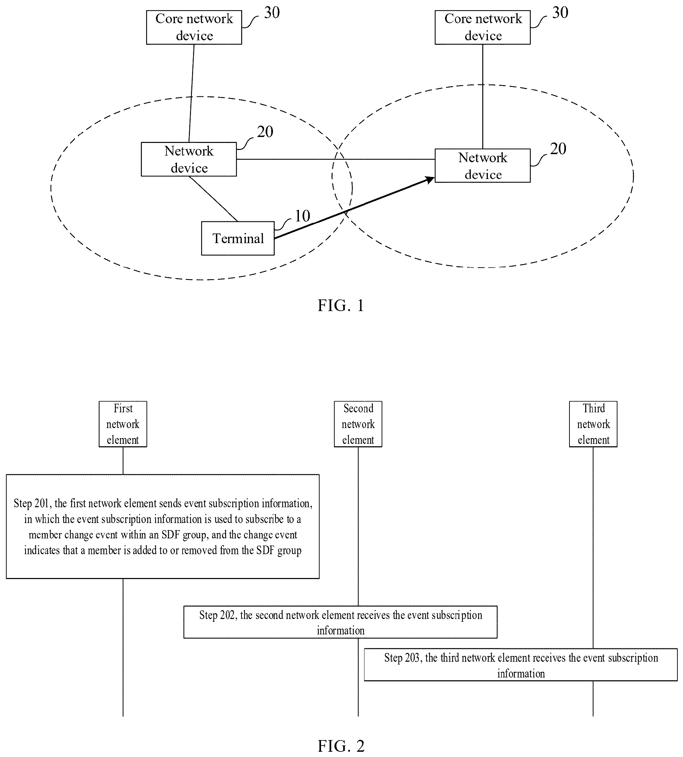

FIG. 1 illustrates a block diagram of a communication system provided by an example embodiment of the disclosure. The communication system include: a terminal 10, an access network device 20 and a core network device 30.

Usually, there are a plurality of terminals 10, and one or more terminals 10 may be distributed in a cell managed by each access network device 20. The terminal 10 may include various handheld devices with wireless communication functions, vehicle-mounted devices, wearable devices, computing devices or other processing devices connected to a wireless modem, as well as various forms of UEs or mobile stations (MSs). For the convenience of description, in the embodiments of the disclosure, the above-mentioned devices are collectively referred to as terminals.

The access network device 20 is an apparatus deployed in an access network to provide wireless communication functions for the terminal 10. For the convenience of description, in the embodiments of the disclosure, the above-mentioned apparatus that provides the wireless communication functions for the terminal 10 is collectively referred to as a network device. A connection may be established between the network device 20 and the terminal 10 via an air interface for communication, including a signaling and data interaction. There may be a plurality of network devices 20, and two adjacent network devices 20 may communicate with each other via wired or wireless means. The terminal 10 is able to switch between different network devices 20, which means that the terminal 10 may establish connections with different network devices 20.

The network device 20 may include various forms of macro base stations, micro base stations, relay stations, access points, etc. In systems using different wireless access technologies, the device with network device functions may be referred to by different names. For example, in a 5G NR system, it is called a gNodeB or a gNB. As communication technology evolves, the name "network device" may change.

The core network device 30 is a device deployed in a core network. The functions of the core network device 30 are mainly to provide user connection, user management and service bearing, and to serve as an interface for a bearing network to connect to external networks. The core network device 30 includes various core network elements having various management functions. For example, the core network elements include an access and mobility management function (AMF) network element, a session management function (SMF) network element, a policy control function (PCF) network element, a user plane function (UPF) network element, a network slice selection function (NSSF) network element, an authentication server function (AUSF) network element, an unified data management (UDM) network element, an AF network element and a network exposure function (NEF) network element.

In some embodiments, the terminal is involved in various types of services, such as mobile media services, cloud augmented reality (AR) or cloud virtual reality (VR) services, cloud games, video-based machine and drone remote control services, etc. The services involving the terminal include multimodal data flows. The multimodal data refers to data of the same service or application input from the same device or different devices, and the data may be output to one or more target devices. In addition, each data flow in the multimodal data has a certain correlation with other flows, that is, the data flows may affect each other, for example, synchronization of audio and video flows, synchronization of touch and vision, etc. The data flows of this type of media services, inter-data flows, and network transmission requirements of these service data flows all have some common characteristics, and thus effective identification and utilization of these characteristics will be more conducive to transmission and control of networks and services, and will also be more conducive to service guarantee and user experience.

In an embodiments of the disclosure, the service in the application may be collectively referred to as an XRM service, and a correlation between data flows is considered in the mobile communication system.

In the embodiments of the disclosure, the terminal interacts with a cloud server to exchange service data, and the cloud server transmits data flows to the AF network element. For the AF network element, the AF network element interacts with the NEF network element to ensure the correlation between data flows.

In some embodiments, the embodiments of the disclosure involves a first network element, a second network element and a third network element, and the first network element may interact with the second network element and the third network element. It is understood that the second network element is a medium between the first network element and the third network element. Alternatively, the first network element and the third network element may interact directly.

In some embodiments, the first network element is an AF network element, the second network element is a PCF network element or a NEF network element, and the third network element is an AMF network element, an SMF network element, a UPF network element or an RAN network element.

FIG. 2 illustrates a flowchart of a method for subscribing to an event provided by an example embodiment of the disclosure. For example, the method is applicable to the first network element, the second network element and the third network element, which belong to the core network device as shown in FIG. 1. The method includes at least part of the following contents.

At step 201, the first network element sends event subscription information, in which the event subscription information is used to subscribe to a member change event within an SDF group, and the change event indicates that a member is added to or removed from the SDF group.

At step 202, the second network element receives the event subscription information.

At step 203, the third network element receives the event subscription information.

The SDF group corresponds to one service. For example, the service may be an XRM service, an AR service or other services, which is not limited in the embodiments of the disclosure. The members included in the SDF group perform a data transmission for the same service. After subscribing to the change event with the event subscription information, in a case where the change event is triggered, the occurred change event will be obtained. For the SDF group, the change event may occur to the member included in the SDF group. That is, there may be an event in which a member is added to the SDF group, or an event in which a member is removed from the SDF group.

It should be noted that the steps performed by the first network element in the embodiments of the disclosure may constitute a new independent embodiment, the steps performed by the second network element may constitute a new independent embodiment, and the steps performed by the third network element may also constitute a new independent embodiment.

In the solutions provided in the embodiments of the disclosure, the first network element subscribes to an event of whether there is a change of the member in the SDF group by sending the event subscription information, ensuring timely synchronization of the change of the member in the SDF group, which breaks the limitation of being unable to identify data flows belonging to the same SDF group, enables a core network function network element to identify the data flows within the same SDF group, and ensures a normal transmission of a service.

FIG. 2 illustrates a transmission of the event subscription information between network elements. The following is a description of information included in the event subscription information.

In some embodiments, the event subscription information includes at least one of the following information.
(1) A common ID of the SDF group.

The common ID is used to identify the SDF group. In the embodiments of the disclosure, the event subscription information includes the common ID, so that it may be determined that the subscribed event is the member change event within the SDF group indicated by the common ID. For example, if the common ID is a common ID 1, it indicates an SDF group 1, and if the common identifier is a common ID 2, it indicates an SDF group 2. Other common IDs indicate other SDF groups, which is not limited in the embodiments of the disclosure.

In some embodiments, the common ID is a common identity document or a service ID.

(2) An event ID of the change event.

The event ID indicates an event. Different event IDs indicate different events. For example, an event ID 1 indicates a change event, an event ID 2 indicates a report event, and other event identifiers indicate other events, which is not limited in the embodiment of the disclosure.

In the embodiments of the disclosure, by carrying the event ID within the event subscription information, it is indicated that the event to which the event subscription information is used to subscribe is an event for subscribing to the member change event within the SDF group.

(3) A report condition of the change event, in which the report condition indicates a condition that triggers reporting of change event.

In some embodiments, the report condition is that the terminal cannot reach the SDF group. It is understood that when it is determined that the terminal cannot reach the SDF group, it is determined that the report condition of the change event is met, and the event that the terminal cannot reach the SDF group needs to be reported.

In some embodiments, the report condition is that the terminal is removed from the SDF group. It is understood that when it is determined that the terminal is removed from the SDF group, it is determined that the report condition of the change event is met, and the event that the terminal is removed from the SDF group needs to be reported.

In some embodiments, the report condition is that QoS authorized by the SDF cannot guarantee the SDF group. It may also be understood that when it is determined that the QoS authorized by the SDF cannot guarantee the SDF group, it is determined that the report condition of the change event is met, and the event that the QoS authorized by the SDF cannot guarantee the SDF group needs to be reported.

In some embodiments, the report condition is that the QoS authorized by the SDF is removed from the SDF group. It may also be understood that when it is determined that the QoS authorized by the SDF is removed from the SDF group, it is determined that the report condition of the change even is met, and the event that the QoS authorized by the SDF is removed from the SDF group needs to be reported.

In some embodiments, the report condition is that a member in the SDF group is removed from an area range where the SDF group is located. It may also be understood that when it is determined that the member in the SDF group is removed from the area range where the SDF group is located, it is determined that the report condition of the change even is met, and the event that the member in the SDF group is removed from the area range where the SDF group is located needs to be reported.

In some embodiments, the report condition is that a member outside of the SDF group enters an area range where the SDF group is located. It may also be understood that when it is determined that the member outside of the SDF group enters the area range where the SDF group is located, it is determined that the report condition of the change even is met, and the event that the member outside of the SDF group enters the area range where the SDF group is located needs to be reported.

In some embodiments, the report condition is that a report time is reached. It may also be understood that when it is determined that the current time reaches the report time, it is determined that the report condition of the change event is met, and the change event needs to be reported.

For example, when the current time reaches the report time, if no change event has occurred, the reported change event is empty. However, if a change event occurs, a change of the member in the SDF group is reported.

(4) A report mode for reporting the change event.

The report mode is used to indicate a mode when it is determined that the subscribed change event needs to be reported.

In some embodiments, the report mode includes at least one of: periodic reporting, immediate reporting, or reporting in a case where a trigger condition is met.

Periodic reporting refers to reporting once every preset duration. Immediate reporting refers to reporting the change event immediately when it is determined that the change event occurs. Reporting in a case where the trigger condition is met refers to reporting the change event when it is determined that the current state meets the trigger condition.

It should be noted that the trigger condition in the above embodiment may also include time information. The following describes the time information included in the report condition.

In some embodiments, in a case where the report mode of the change event is immediate reporting, the report condition includes a reporting time point, that is, when the time reaches the reporting time point, the change event is reported.

In some embodiments, in a case where the report mode of the change event is periodic reporting, the report condition includes a starting time point and an interval duration for reporting the change event. That is, after the time reaches the starting time point, the change event is reported once every interval duration.

In some embodiments, in a case where the report mode of the change event periodic reporting, the report condition includes a starting time point, an interval duration and a reporting duration for reporting the change event. That is, after the time reaches the starting time point, the change event is reported once every interval duration until the duration from the start time point reaches the end of the reporting duration.

In some embodiments, the trigger condition further includes at least one of: a public land mobile network (PLMN), a network slice, a service area, a time window, a combination of a data network name (DNN) or signal network slice selection assistance information (S-NSSAI).

It should be noted that the trigger conditions in the embodiments of the disclosure may be combined, that is, in a case where a plurality of trigger conditions are met, it is determined to report the change event.

In the solutions provided by the embodiments of the disclosure, the information included in the event subscription information may indicate the event that the event subscription information indicates to subscribe to, ensuring an integrity and an accuracy of the information carried in the event subscription information, thereby ensuring an accuracy of subscribing to the change event.

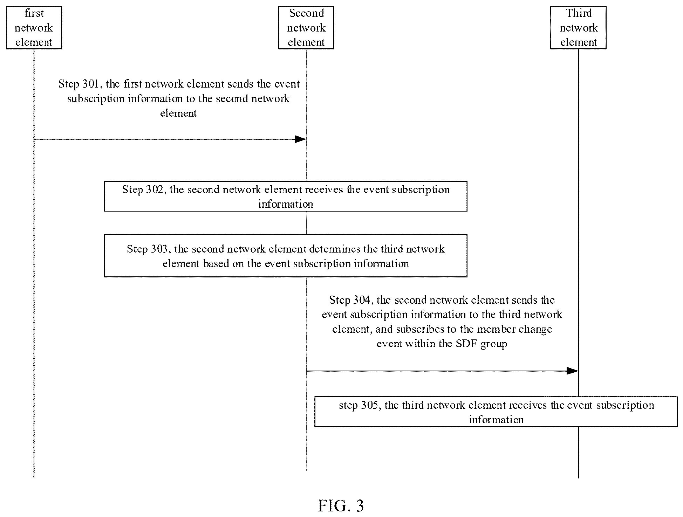

FIG. 2 illustrates that the first network element needs to send the event subscription information. A target to which the first network element sends the event subscription information will be described below. As illustrated in FIG. 3, the method includes the following steps.

At step 301, the first network element sends the event subscription information to the second network element. The first network element needs to subscribe to the change event from a network element responsible for the change event, and the sending to the network element responsible for the change event needs to be relayed by the second network element, so that the first network element needs to send the event subscription information to the second network element first.

In some embodiments, the second network element may be a NEF network element or a PCF network element.

In some embodiments, step 301 may be a possible implementation of the above step 201, or step 301 may be performed independently, which is not limited by the embodiments of the disclosure.

At step 302, the second network element receives the event subscription information.

At step 303, the second network element determines the third network element based on the event subscription information.

In the embodiments of the disclosure, the second network element is configured to forward information to other network elements. After receiving the event subscription information, the second network element needs to determine which network element manages the change event that the event subscription information indicates to subscribe to. After determining the third network element corresponding to the event subscription information, the second network element may forward the event subscription information to the determined third network element.

In some embodiments, a type of the change event is determined based on the event subscription information, and the network element responsible for the change event of this type is determined as the third network element.

In the embodiments of the disclosure, different third network elements are responsible for change events of different types, so after determining the type of the change event subscribed by the event subscription information, the corresponding third network element may be selected according to the determined type.

In some embodiments, in a case where the change event of the event subscription information belongs to a session type, it is determined that the network element responsible for this session type is an SMF network element. In a case where the change event of the event subscription information belongs to a user function type, it is determined that the network element responsible for this user function type is a UPF network element.

In some embodiments, in a case where the first network element is an AF network element and the second network element is the PCF network element, in the above steps 301-303, the AF network element sends the event subscription information to the PCF network element, the PCF network element receives the event subscription information sent by the AF network element, and the PCF network element determines the third network element based on the event subscription information and sends the event subscription information to the third network element.

In other embodiments, in a case where the first network element is an AF network element and the second network element is the NEF network element, in the above steps 301-303, the AF network element sends the event subscription information to the NEF network element, the NEF network element receives the event subscription information sent by the AF network element, and the NEF network element determines the third network element based on the event subscription information and sends the event subscription information to the third network element.

It should be noted that the embodiments of the disclosure are described by taking the second network element being as the NEF network element or the PCF network element as an example. In some embodiments, the second network element includes both the PCF network element and the NEF network element, and there is an interactive relationship between the PCF network element and the NEF network element.

For another example, the AF network element sends the event subscription information to the PCF network element. After receiving the event subscription information, the PCF network element determines the third network element based on the event subscription information and sends the event subscription information to the NEF network element. After receiving the event subscription information, the NEF network element sends the event subscription information to the third network element.

For example, the AF network element sends the event subscription information to the NEF network element, the NEF network element sends the received event subscription information to the PCF network element, and then the PCF network element determines the third network element based on the event subscription information and sends the event subscription information to the third network element.

In some embodiments, the second network element includes a PCF network element, a NEF network element and a time-sensitive communication and time synchronization function (TSCTSF) network element, and there is an interactive relationship among the PCF network element, the NEF network element and the TSCTSF network element.

For example, the AF network element sends the event subscription information to the TSCTSF network element, and the TSCTSF network element sends the event subscription information to the NEF network element after receiving the event subscription information. The NEF network element sends the received event subscription information to the PCF network element, and then the PCF network element determines the third network element based on the event subscription information and sends the event subscription information to the third network element.

For example, the AF network element sends the event subscription information to the NEF network element, and the NEF network element sends the event subscription information to the TSCTSF network element after receiving the event subscription information. The TSCTSF network element sends the received event subscription information to the PCF network element, and then the PCF network element determines the third network element based on the event subscription information and sends the event subscription information to the third network element.

In some embodiments, step 303 may be a possible implementation. In another embodiment, step 304 may be directly executed without executing the above step 303.

At step 304, the second network element sends the event subscription information to the third network element, and subscribes to the member change event within the SDF group.

In some embodiments, a UE number change is subscribed to the UDM/AMF, and an SDF number change is subscribed to the SMF/UPF/radio access network (RAN).

At step 305, the third network element receives the event subscription information.

In some embodiments, the third network element is at least one of an UDM, an AMF, an SMF, a UPF or a RAN.

It should be noted that in the embodiments of the disclosure, the steps performed by the first network element may constitute a new independent embodiment, the steps performed by the second network element may constitute a new independent embodiment, and the steps performed by the third network element may constitute a new independent embodiment.

In the embodiments of the disclosure, after receiving the event subscription information, the third network element determines that the first network element subscribes to the change event from the third network element, and the third network element needs to monitor according to the subscribed change event to determine the change event to be reported.

FIG. 2 illustrates that there may be the change event for the member in the SDF group. The member involved in the disclosure will be described below.

In some embodiments, the member includes at least one of a terminal or an SDF. That is, a change event may occur to at least one terminal in the SDF group, or a change event may occur to at least one SDF in the SDF group.

In some embodiments, the terminal includes at least one of the following terminals.
(1) A terminal in a target PLMN.
   In the embodiments of the disclosure, the change event indicates that the terminal in the target PLMN in the SDF group is added to or removed from the SDF group.
(2) A terminal in a target network slice.
   In the embodiments of the disclosure, the change event indicates that the terminal in the target network slice in the SDF group is added to or removed from the SDF group.
(3) A terminal in a target service area.

In the embodiments of the disclosure, the change event indicates that the terminal in the target service area in the SDF group is added to or removed from the SDF group.

The target service area is used to indicate an area range. For example, the target service area may be an area of any province, an area of any urban area, or an area of other granularity, which is not limited by the embodiments of the disclosure.

(4) A terminal in a target time window.

In the embodiments of the disclosure, the change event indicates that the terminal in the target time window in the SDF group is added to or removed from the SDF group.

The target time window refers to a time range from a starting time point to an end time point. For example, the target time window is from 8am to 8pm.

(5) A terminal in a target combination of a DNN and S-NSSAI.

In the embodiments of the disclosure, the change event indicates that the terminal in the target combination of the DNN and S-NSSA in the SDF group is added to or removed from the SDF group.

In an embodiments of the disclosure, the SDF includes at least one of the following SDFs.
(1) An SDF in a target PLMN.
   In the embodiments of the disclosure, the change event indicates that the SDF in the target PLMN in the SDF group is added to or removed from the SDF group.
(2) An SDF in a target network slice.
   In the embodiments of the disclosure, the change event indicates that the SDF in the target network slice in the SDF group is added to or removed from the SDF group.
(3) An SDF in a target service area.
   In the embodiments of the disclosure, the change event indicates that the SDF in the target service area in the SDF group is added to or removed from the SDF group.
(4) An SDF in a target time window.
   In the embodiments of the disclosure, the change event indicates that the SDF in the target time window in the SDF group is added to or removed from the SDF group.
(5) An SDF in a target combination of a DNN and S-NSSAI.

In the embodiments of the disclosure, the change event indicates that the SDF in the target combination of the DNN and S-NSSAI in the SDF group is added to or removed from the SDF group.

In the solutions provided by the embodiments of the disclosure, different types of members within the SDF group are provided, so as to determine the change events occurring to different types of members within the SDF group, thereby ensuring an accuracy of the subscribed change event.

The embodiment shown in FIG. 2 illustrates the event subscription information. The event subscription information may also include at least one of the following information.
(1) A terminal address.
   The terminal address indicates an address used by the terminal. In some embodiments, the terminal address is a UE address.
(2) A terminal ID.
   The terminal ID indicates identity information of a terminal. In some embodiments, the terminal ID is a UE Identifier.
(3) An AF ID.
   The AF ID indicates identity information of an AF. In some embodiments, the AF ID is an AF Identifier.
(4) An application ID.
   The application ID indicates identity information of an application. In some embodiments, the application is an instant communication application, an item recommendation application, a game application or other types of applications, which are not limited by the embodiments of the disclosure. In some embodiments, the application ID is an Application ID.
(5) A DNN.
(6) S-NSSAI.
(7) A QoS parameter.

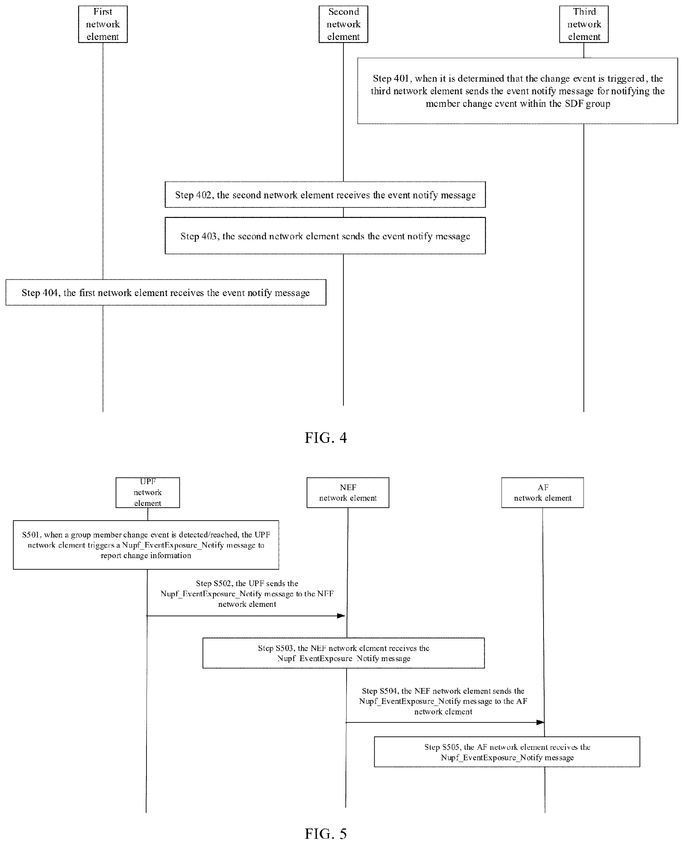

In some embodiments, the third network element monitors the change event based on the event subscription information, and then sends an event notification message for notifying the change event. As illustrated in FIG. 4, the method includes the following steps.

At step 401, when determining that the change event is triggered, the third network element sends the event notification message for notifying the member change event within the SDF group.

In the embodiments of the disclosure, the third network element monitors according to the subscribed change event, and reports the event notification message when it is determined that the change event is triggered, so as to inform the first network element that the member within the SDF group changes.

At step 402, the second network element receives the event notification message.

At step 403, the second network element sends the event notification message.

At step 404, the first network element receives the event notification message.

In some embodiments, the third network element may also send the event notification message to the first network element.

In some embodiments, in a case where the first network element is an AF network element and the second network element is a PCF network element, in the above steps 401-404, the third network element sends the event notification message to the PCF network element, and the PCF network element sends the event notification message to the AF network element after receiving the event notification message.

In other embodiments, in a case where the first network element is an AF network element and the second network element is a NEF network element, in the above steps 401-404, the third network element sends the event notification message to the NEF network element, and the NEF network element sends the event notification message to the AF network element after receiving the event notification message.

It should be noted that the embodiments of the disclosure are described by taking the second network element being as the NEF network element or the PCF network element as an example. In some embodiments, the second network element includes both the PCF described and the NEF described, and there is an interactive relationship between the PCF described and the NEF described.

For example, the third network element sends the event notification message to the PCF network element, and the PCF network element receives the event notification message and then sends the event notification message to the NEF network element. After receiving the event notification message, the NEF network element sends the event notification message to the AF network element.

The method implemented in the disclosure will be described below by way of example. For example, the third network element is a UPF network element, the second network element is a NEF network element, and the first network element is an AF network element. As illustrated in FIG. 5, the method includes the following steps.

At step S501, when a group member change event is detected/reached, the UPF network element triggers a Nupf_EventExposure_Notify message to report change information.

At step S502, the UPF sends the Nupf_EventExposure_Notify message to the NEF network element.

At step S503, the NEF network element receives the Nupf_EventExposure_Notify message.

At step S504, the NEF network element sends the Nupf_EventExposure_Notify message to the AF network element.

At step S505, the AF network element receives the Nupf_EventExposure_Notify message.

It should be noted that in the embodiments of the disclosure, steps performed by the first network element may constitute a new independent embodiment, steps performed by the second network element may constitute a new independent embodiment, and steps performed by the third network element may constitute a new independent embodiment.

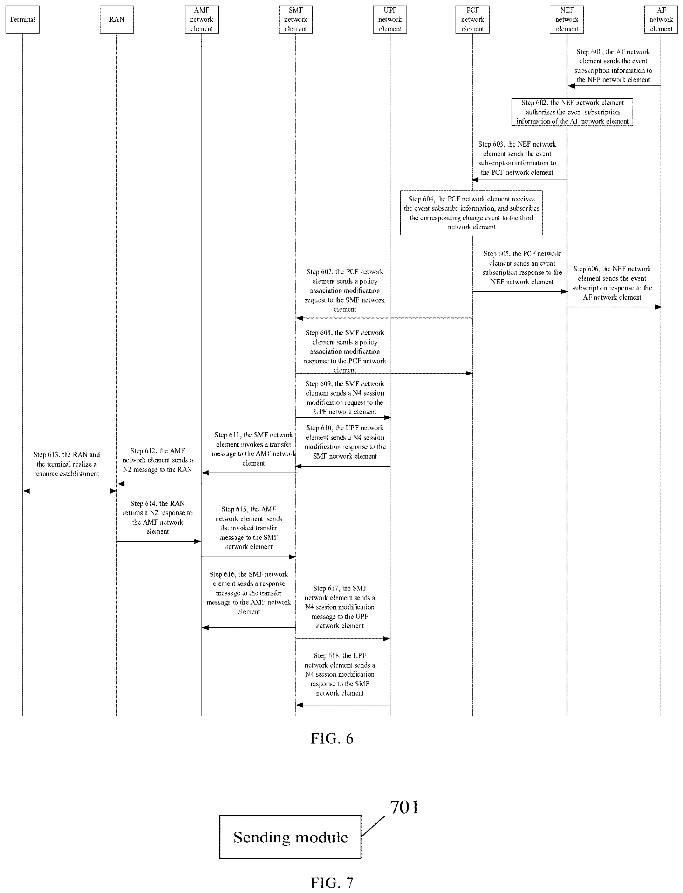

In the following, an example of establishing and subscribing to a member change event of a session message will be used for illustration. The embodiments of the disclosure involves an AF network element, a NEF network element, a PCF network element, a UPF network element, an SMF network element, an AMF network element, an RAN network element and a terminal. As illustrated in FIG. 6, the method includes the following steps.

At step 601, the AF network element sends the event subscription information to the NEF network element.

In some embodiments, the event subscription information is Npcf_PolicyAuthorization_Subscribe.

At step 602, the NEF network element authorizes the event subscription information of the AF network element.

At step 603, the NEF network element sends the event subscription information to the PCF network element.

At step 604, the PCF network element receives the event subscription information, and subscribes the corresponding change event to the third network element.

At step 605, the PCF network element sends an event subscription response to the NEF network element.

At step 606, the NEF network element sends the event subscription response to the AF network element.

In some embodiments, the event subscription response is Nnef_AFsessionWithQoS_Create response.

At step 607, the PCF network element sends a policy association modification request to the SMF network element.

In some embodiments, the policy association modification request includes a group member change event.

At step 608, the SMF network element sends a policy association modification response to the PCF network element.

At step 609, the SMF network element sends a N4 session modification request to the UPF network element.

At step 610, the UPF network element sends a N4 session modification response to the SMF network element.

At step 611, the SMF network element invokes a transfer message to the AMF network element.

In some embodiments, the transfer message is Namf_Communication_N1N2MessageTransfer.

In some embodiments, the message transfer request includes N2 SM information and/or a N1 SM container. The N2 SM information includes: a protocol data unit (PDU) Session ID, a QoS flow identity (QFI) or a QoS Profile.

At step 612, the AMF network element sends a N2 message to the RAN.

At step 613, the RAN and the terminal realize a resource establishment.

At step 614, the RAN returns a N2 response to the AMF network element.

At step 615, the AMF network element sends the invoked transfer message to the SMF network element.

At step 616, the SMF network element sends a response message to the transfer message to the AMF network element.

At step 617, the SMF network element sends a N4 session modification message to the UPF network element.

At step 618, the UPF network element sends a N4 session modification response to the SMF network element.

It should be noted that the above embodiments may be split into new embodiments, or combined with other embodiments to form new embodiments, and this application does not limit the combination between the embodiments.

FIG. 7 illustrates a block diagram of an apparatus for subscribing to an event provided by an example embodiment of the disclosure. As illustrated in FIG. 7, the apparatus includes:

a sending module 701, configured to send event subscription information, in which the event subscription information is used to subscribe to a member change event within an SDF group, and the change event indicates that a member is added to or removed from the SDF group.

In some embodiments, the event subscription information includes at least one of:
a common ID of the SDF group;
an event ID of the change event;
a report condition of the change event, in which the report condition indicates a condition that triggers reporting of change event.
a report mode for reporting the change event.

In some embodiments, the report mode includes at least one of:
periodic reporting;
immediate reporting; or
reporting in a case where a trigger condition is met.

In some embodiments, the sending module 701 is further configured to send the event subscription information to a second network element.

In some embodiments, the second network element is a NEF network element or a PCF network element.

In some embodiments, the member includes at least one of:
a terminal; or
an SDF.

In some embodiments, the terminal includes at least one of:
a terminal in a target PLMN;
a terminal in a target network slice;
a terminal in a target service area;
a terminal in a target time window; or
a terminal in a target combination of a DNN and S-NSSAI.

In some embodiments, the SDF includes at least one of:
an SDF in a target PLMN;
an SDF in a target network slice;
an SDF in a target service area;
an SDF in a target time window; or
an SDF in a target combination of a DNN and S-NSSAI.

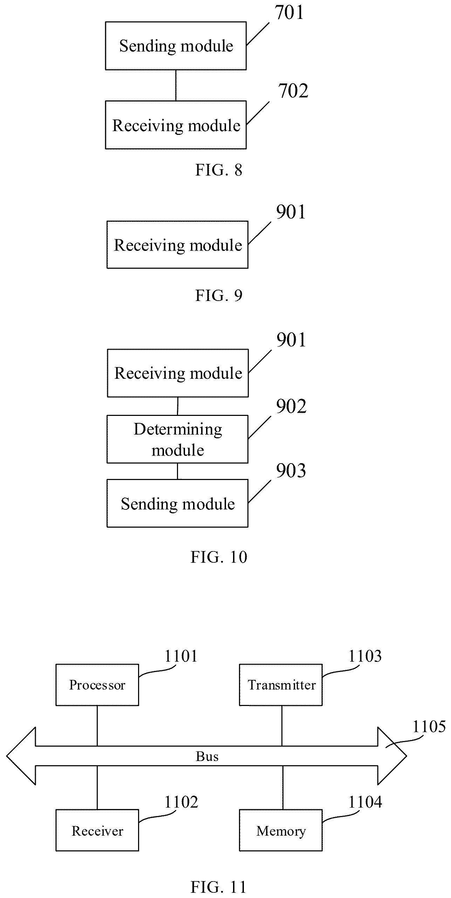

In some embodiments, as illustrated in FIG. 8, the apparatus further includes:
a receiving module, configured to receive event subscription information, in which the event subscription information is used for notifying the member change event within the SDF group.

In some embodiments, the event subscription information includes at least one of:
a terminal address;
a terminal ID;
an AF ID;
an application ID;
a DNN;
S-NSSAI; or
a QoS parameter.

In some embodiments, the first network element is an AF network element.

It should be noted that the apparatus provided in the above embodiments is split into the above-mentioned function modules when realizing its functions. In practical application, the above-mentioned functions may be distributed to and completed by different function modules as required. That is, the internal structure of the apparatus is divided into different function modules to complete all or part of the above-mentioned functions. In addition, the apparatus provided in the above embodiment belongs to the same concept as the method embodiments, and the specific implementation process can refer to the method embodiments, which is not repeated here.

FIG. 9 illustrates a block diagram of an apparatus for subscribing to an event provided by an example embodiment of the disclosure. As illustrated in FIG. 9, the apparatus includes:
a receiving module 901, configured to receive event subscription information, in which the event subscription information is used to subscribe to a member change event within an SDF group, and the change event indicates that a member is added to or removed from the SDF group.

In some embodiments, the event subscription information includes at least one of:
a common ID of the SDF group;
an event ID of the change event;
a report condition of the change event, wherein the report condition indicates a condition that triggers reporting of change event.
a report mode for reporting the change event.

In some embodiments, the report mode includes at least one of:
periodic reporting;
immediate reporting; or
reporting in a case where a trigger condition is met.

In some embodiments, the member includes at least one of:
a terminal; or
an SDF.

In some embodiments, the terminal includes at least one of:
a terminal in a target PLMN;
a terminal in a target network slice;
a terminal in a target service area;
a terminal in a target time window; or
a terminal in a target combination of a DNN and S-NSSAI.

In some embodiments, the SDF includes at least one of:
an SDF in a target PLMN;
an SDF in a target network slice;
an SDF in a target service area;
an SDF in a target time window; or
an SDF in a target combination of a DNN and S-NSSAI.

In some embodiments, the event subscription information includes at least one of:
a terminal address;
a terminal ID;
an AF ID;
an application ID;
a DNN;
S-NSSAI; or
a QoS parameter.

In some embodiments, as illustrated in FIG. 10, the apparatus further includes:
a determining module 902, configured to determine a third network element based on the event subscription information; and
a sending module 903, configured to send the event subscription information to the third network element and subscribe to the member change event within the SDF group.

In some embodiments, the determining module 902 is configured to:
determine a type of the change event based on the event subscription information; and
determine a network element responsible for the change event of the type as the third network element.

In some embodiments, the receiving module is further configured to: receive an event notification message, in which the event notification message is configured to notify the member change event within the SDF group.

The apparatus further includes:
a sending module 903, configured to send the event notification message.

In some embodiments, the second network element is a PCF network element or a NEF network element.

In some embodiments, the apparatus further includes:
a sending module 903, configured to send an event notification message in a case of determining that the change event is triggered, in which the event notification message is used to notify the member change event within the SDF group.

In some embodiments, the apparatus further includes:
a sending module 903, configured to send an event notification message in a case of determining that the change event is triggered, in which the event notification message is used to notify the member change event within the SDF group.

In some embodiments, the third network element is at least one of a UDM, an AMF, a SMF, a UPF or an RAN.

It should be noted that the apparatus provided in the above embodiment is split into the above-mentioned function modules when realizing its functions. In practical application, the above-mentioned functions may be distributed to and completed by different function modules as required. That is, the internal structure of the apparatus is divided into different function modules to complete all or part of the above-mentioned functions. In addition, the apparatus provided in the above embodiment belongs to the same concept as the method embodiments, and the specific implementation process can refer to the method embodiments, which is not repeated here.

FIG. 11 illustrates a schematic diagram of a communication device provided by an example embodiment of the disclosure. The communication device includes: a processor 1101, a receiver 1102, a transmitter 1103, a memory 1104 and a bus 1105.

The processor 1101 includes one or more processing cores. The processor 1101 executes various functional applications and information processing by running software programs and modules.

The receiver 1102 and the transmitter 1103 may be realized as a communication component, such as a communication chip.

The memory 1104 is connected to the processor 1101 through the bus 1105.

The memory 1104 may be configured to store at least one program code, and the processor 1101 is configured to execute the at least one program code to realize the steps in the above method embodiments.

In addition, the communication device may be a first network element, a second network element or a third network element. The memory 1104 may be realized by any type of volatile or nonvolatile memory device or their combinations. The volatile or nonvolatile memory device includes but not limited to: a magnetic disk or an optical disk, an electrically erasable programmable read-only memory (EEPROM), an erasable programmable read-only memory (EPROM), a static random access memory (SRAM), a read-only memory (ROM), a magnetic memory, a flash memory and a programmable ROM (PROM).

In an example embodiment, a computer-readable storage medium is provided. The readable storage medium stores an executable program code, and the executable program code is loaded and executed by a processor to realize the method for subscribing to the event executed by the communication device in the above method embodiments.

In an example embodiment, a chip is provided. The chip includes a programmable logic circuit and/or program instructions. When the chip is running on a network element, the method for subscribing to the event in the above method embodiments is implemented.

In an exemplary embodiment, a computer program product is provided. When the computer program product is executed by a processor of a network element, the method for subscribing to the event in the above method embodiments is implemented.

Those ordinary skilled in the art understand that all or part of the steps in the above embodiments may be completed by hardware or by a program instructing related hardware. The program may be stored in a computer-readable storage medium, and the above-mentioned storage medium may be a ROM, a magnetic disk or an optical disk, etc.

The foregoing descriptions are merely optional embodiments of the application, and are not intended to limit the application. Any modifications, equivalent substitutions, improvements, etc. made within the spirit and principles of the disclosure shall be included in the protection scope of the disclosure.

## Claims

1. A method for subscribing to an event, performed by a first network element, comprising:
sending event subscription information, wherein the event subscription information is used to subscribe to a member change event within a service data flow (SDF) group, and the change event indicates that a member is added to or removed from the SDF group.

2. The method of claim 1, wherein the event subscription information comprises at least one of:
a common identifier (ID) of the SDF group;
an event ID of the change event;
a report condition of the change event, wherein the report condition indicates a condition that triggers reporting of change event; or
a report mode for reporting the change event.

3. The method of claim 2, wherein the report mode comprises at least one of:
periodic reporting;
immediate reporting; or
reporting in a case where a trigger condition is met.

4. The method of claim 1, wherein sending the event subscription information, comprises:
sending the event subscription information to a second network element.

5. The method of claim 4, wherein the second network element is a network exposure function (NEF) network element or a policy control function (PCF) network element.

6. The method of claim 1, wherein the member comprises at least one of:
a terminal; or
an SDF.

7. The method of claim 6, wherein the terminal comprises at least one of:
a terminal in a target public land mobile network (PLMN);
a terminal in a target network slice;
a terminal in a target service area;
a terminal in a target time window; or
a terminal in a target combination of a data network name (DNN) and signal network slice selection assistance information (S-NSSAI).

8. The method of claim 6, wherein the SDF comprises at least one of:
an SDF in a target PLMN;
an SDF in a target network slice;
an SDF in a target service area;
an SDF in a target time window; or
an SDF in a target combination of a DNN and S-NSSAI.

9. The method of any one of claims 1-8, further comprising:
receiving an event notification message, wherein the event notification message is used for notifying the member change event within the SDF group.

10. The method of any one of claims 1-8, wherein the event subscription information comprises at least one of:
a terminal address;
a terminal ID;
an application function (AF) ID;
an application ID;
a DNN;
S-NSSAI; or
a quality of service (QoS) parameter.

11. The method of any one of claims 1-10, wherein the first network element is an AF network element.

12. A method for subscribing to an event, performed by a second network element or a third network element, comprising:
receiving event subscription information, wherein the event subscription information is used to subscribe to a member change event within an SDF group, and the change event indicates that a member is added to or removed from the SDF group.

13. The method of claim 12, wherein the event subscription information comprises at least one of:
a common ID of the SDF group;
an event ID of the change event;
a report condition of the change event, wherein the report condition indicates a condition that triggers reporting of change event; or
a report mode for reporting the change event.

14. The method of claim 13, wherein the report mode comprises at least one of:
periodic reporting;
immediate reporting; or
reporting in a case where a trigger condition is met.

15. The method of claim 12, wherein the member comprises at least one of:
a terminal; or
an SDF.

16. The method of claim 15, wherein the terminal comprises at least one of:
a terminal in a target PLMN;
a terminal in a target network slice;
a terminal in a target service area;
a terminal in a target time window; or
a terminal in a target combination of a DNN and S-NSSAI.

17. The method of claim 15, wherein the SDF comprises at least one of:
an SDF in a target PLMN;
an SDF in a target network slice;
an SDF in a target service area;
an SDF in a target time window; or
an SDF in a target combination of a DNN and S-NSSAI.

18. The method of any one of claims 12-17, wherein the event subscription information comprises at least one of:
a terminal address;
a terminal ID;
an AF ID;
an application ID;
a DNN;
S-NSSAI; or
a QoS parameter.

19. The method of claim 12, wherein in a case where the method is performed by the second network element, the method further comprises:
determining a third network element based on the event subscription information; and
sending the event subscription information to the third network element, and subscribing to the member change event within the SDF group.

20. The method of claim 19, wherein determining the third network element based on the event subscription information, comprises:
determining a type of the change event based on the event subscription information; and
determining a network element responsible for the change event of the type as the third network element.

21. The method of claim 12, wherein in a case where the method is performed by the second network element, the method further comprises:
receiving an event notification message, wherein the event notification message is used for notifying the member change event within the SDF group; and
sending the event notification message.

22. The method of any one of claims 12-21, wherein the second network element is a PCF network element or a NEF network element.

23. The method of claim 12, wherein in a case where the method is performed by the third network element, the method further comprises:
in a case of determining that the change event is triggered, sending an event notification message, wherein the event notification message is used for notifying the member change event within the SDF group.

24. The method of claim 12, wherein in a case where the method is performed by the third network element, the method further comprises:
in a case of determining that the change event is triggered, sending an event notification message, wherein the event notification message is used for notifying the member change event within the SDF group.

25. The method of any one of claims 12-24, wherein the third network element is at least one of an unified data management (UDM), an access and mobility management function (AMF), a session management function (SMF), a user plane function (UPF) or a radio access network (RAN).

26. An apparatus for subscribing to an event, comprising:
a sending module, configured to send event subscription information, wherein the event subscription information is used to subscribe to a member change event within an SDF group, and the change event indicates that a member is added to or removed from the SDF group.

27. An apparatus for subscribing to an event, comprising:
a receiving module, configured to receive event subscription information, wherein the event subscription information is used to subscribe to a member change event within an SDF group, and the change event indicates that a member is added to or removed from the SDF group.

28. A network element, comprising:
a processor; and
a transceiver connected to the processor;
wherein the processor is configured to load and execute executable instructions to realize the method for subscribing to the event according to any one of claims 1-25.
